# EUROPEAN PATENT APPLICATION

(11) **EP 4 678 406 A1**
(43) Date of publication of application: **14.01.2026**
(21) Application number: 24766238.0
(22) Date of filing: 02.02.2024
(51) Int. Cl.: B60B 17/00, B61K 5/02

(54) **MAGNETIC LEVITATION TRAIN RESCUE WHEEL DEVICE AND MAGNETIC LEVITATION TRAIN**

(30) Priority: 07.03.2023 CN 202310213016
(71) Applicant: CRRC QINGDAO SIFANG CO., LTD., Shandong 266111 (CN)
(72) Inventor: FU, Shanqiang, Qingdao, Shandong 266111 (CN); DING, Sansan, Qingdao, Shandong 266111 (CN); WU, Donghua, Qingdao, Shandong 266111 (CN); YU, Dalian, Qingdao, Shandong 266111 (CN); GU, Chenliang, Qingdao, Shandong 266111 (CN); ZHAI, Chaozhi, Qingdao, Shandong 266111 (CN)
(74) Representative: Prinz & Partner mbB
(86) International application number: PCT/CN2024/075381
(87) International publication number: WO 2024/183516

(57) **Abstract**

A magnetic levitation train rescue wheel device and a magnetic levitation train. The magnetic levitation train rescue wheel device comprises a mounting base (3), wheel bearing members (2) and a hydraulic cylinder (4). The mounting base (3) comprises a horizontal mounting base (31) and a vertical mounting base (32). The wheel bearing members (2) are located on two sides of the vertical mounting base (32), and, by means of an eccentric rotating shaft (5), are rotatably mounted on the vertical mounting base (32). Each wheel bearing member (2) is separately equipped, by means of a wheel axle (21), with a wheel (1) located on the outer side thereof. The hydraulic cylinder (4) is obliquely provided, one end thereof being hinged to the horizontal mounting base (31), and the other end being hinged to drive arms (22) of the wheel bearing members (2), so as to drive the wheels (1) to be in a retracted or lowered state. The two sides of the vertical mounting base (32) are provided with stop blocks (321). Each wheel bearing member (2) is provided with a supporting portion (23) for positioning. In the lowered state of the wheels (1), the supporting portions (2) of the wheel bearing members (2) abut upward against the stop blocks (321). The device can solve the problem of difficult rescue for high-speed magnetic levitation vehicles, thus improving rescue efficiency.

## Description

The present application claims the priority to Chinese Patent Application No. 202310213016.X, titled "MAGNETIC LEVITATION TRAIN RESCUE WHEEL DEVICE AND MAGNETIC LEVITATION TRAIN", filed on March 7, 2023 with the China National Intellectual Property Administration, which is incorporated herein by reference in its entirety.

### FIELD

The present application relates to the technical field of maglev trains, and in particular to a maglev train rescue wheel device. The present application further relates to a maglev train including the rescue wheel device.

### BACKGROUND

In recent years, with the rapid development of rail transportation, high-speed magnetic levitation has emerged as a significant direction for future rail transportation. However, the wrap-around rail structure of the high-speed maglev vehicles complicates rescue operations in case of failures. Conventional rescue relies on skid-based sliding along the rail, making the rescue difficult and low efficient.

### SUMMARY

An object of the present application is to provide a maglev train rescue wheel device to address the difficulty in rescue of the high-speed maglev vehicles and improve rescue efficiency.

Another object of the present application is to provide a maglev train including the maglev train rescue wheel device.

In order to achieve the above objects, a maglev train rescue wheel device is provided according to the present application, including a mounting base, wheel carriers and a hydraulic cylinder. The mounting base includes a horizontal mounting base and a vertical mounting base, with the vertical mounting base located below the horizontal mounting base and connected to the horizontal mounting base. The wheel carriers are disposed on both sides of the vertical mounting base respectively and rotatably mounted to the vertical mounting base via an eccentric rotary shaft, and each of the wheel carriers is provided with a wheel mounted at its outer side through a wheel axle. The hydraulic cylinder is arranged obliquely, with one end hinged to the horizontal mounting base and the other end hinged to driving arms of the wheel carriers, so as to drive the wheel carriers along with the wheels to rotate around the eccentric rotary shaft, to make the wheels be in a retracted state or a lowered state. Each of the both sides of the vertical mounting base is provided with a limiting block, and each of the wheel carriers is provided with a support portion for positioning. In the retracted state of the wheels, the support portion of each of the wheel carriers is not in contact with the corresponding limiting block, and in the lowered state of the wheels, the support portion of each of the wheel carriers upwardly abuts against the corresponding limiting block.

Optionally, in the lowered state of the wheels, an included angle is formed between a line connecting a rotation center of the eccentric rotary shaft with a center of the wheel axle and a vertical direction.

Optionally, the maglev train rescue wheel device further includes a crank and a locking spring. The crank configured in an arc shape with an extension arm at its head portion. The head portion of the crank is hinged to the vertical mounting base, an upper end of the locking spring is connected to the horizontal mounting base, and a lower end of the locking spring is connected to the extension arm of the crank. The crank is provided with an arc-shaped slot, each of the wheel carriers is provided with a locking arm. The locking arms of two of the wheel carriers are connected by a hinge pin that passes through the arc-shaped slot, with the hinge pin being in sliding engagement with the arc-shaped slot.

Optionally, an upper end of the arc-shaped slot is bent towards a center of a circular arc of the arc-shaped slot.

Optionally, the driving arm and the locking arm of each of the wheel carriers are located at opposite sides of the corresponding wheel axle.

Optionally, the driving arm and the locking arm are substantially aligned along a same axis, and alternatively, the driving arm and the locking arm are disposed at an included relative to each other.

Optionally, a bottom of the limiting block has a horizontal limiting plane, and a periphery of the support portion of the wheel carrier is provided with a support plane; in the lowered state of the wheels, the support plane of the wheel carrier upwardly abuts against the limiting plane of the limiting block.

Optionally, the support portion of the wheel carrier is formed as a portion extending in a radial direction by taking the wheel axle as a center of a circle, and the eccentric rotary shaft laterally connects the support portions of two of the wheel carriers.

Optionally, a cylinder body of the hydraulic cylinder is hinged to the horizontal mounting base, and a piston rod of the hydraulic cylinder is hinged to the driving arm. In the retracted state of the wheels, oil in a rodless chamber of the hydraulic cylinder is locked, and in the lowered state of the wheels, the hydraulic cylinder maintains constant pressure.

In order to achieve the another object described above, a maglev train is further provided according to the present application, including a train body and rescue devices arranged at a bottom of the train body. The rescue device is the maglev train rescue wheel device according to any one of the above solutions, each pair of the maglev train rescue wheel devices is arranged in mirror symmetry at the bottom of the train body, and a pair of the hydraulic cylinders of each of the maglev train rescue wheel devices is arranged in an inverted "V" shape.

The maglev train rescue wheel device provided by the present application mainly includes mounting bases, wheels, hydraulic cylinders, and eccentric rotary shafts. Relying on the wheel lifting mechanism formed by these components, the wheels can be lowered to lift the vehicle before rescue operations, the wheels can be self-locked mechanically to support the vehicle during the rescue process, and the wheels can be retracted and locked after the rescue is completed. In case of maglev vehicle failure, rapid rescue operations can be carried out, offering advantages such as economy, practicality, lightweight design, modularity, and high reliability. Furthermore, the structural design of the eccentric rotary shaft features a large moment arm, which facilitates the lifting and lowering processes and effectively reduces the difficulty in designing and selecting hydraulic components.

The maglev train provided according to the present application is equipped with the maglev train rescue wheel devices. Since the above maglev train rescue wheel device has the above effects, the maglev train equipped with the maglev train rescue wheel devices also has the corresponding effects.

### BRIEF DESCRIPTION OF THE DRAWINGS

FIG. 1 is a perspective view of a maglev train rescue wheel device according to an embodiment of the present application;
FIG. 2 is a perspective view of the maglev train rescue wheel device of FIG. 1 with two wheels being removed;
FIG. 3 is a front view of the maglev train rescue wheel device of FIG. 2 in a retracted state; and
FIG. 4 is a front view of the maglev train rescue wheel device of FIG. 2 in a lowered state.

### Reference numerals:

| | | | |
|---|---|---|---|
| 1 | wheel, | 2 | wheel carrier, |
| 21 | wheel axle, | 22 | driving arm, |
| 23 | support portion, | 24 | locking arm, |
| 231 | support plane, | 3 | mounting base, |
| 31 | horizontal mounting base, | 32 | vertical mounting base, |
| 321 | limiting block, | 4 | hydraulic cylinder, |
| 5 | eccentric rotary shaft, | 6 | crank, |
| 61 | extension arm, | 62 | arc-shaped slot, |
| 7 | locking spring. | | |

### DETAILED DESCRIPTION OF THE EMBODIMENTS

For those skilled in the art to better understand the technical solutions of the present application, the present application is described in further detail below in conjunction with the accompanying drawings and specific embodiments.

In this application, the terms such as "up, down, inner, outer" and the like are established based on the positional relationship shown in the attached drawings, and the corresponding positional relationship may vary with different attached drawings. Therefore, these terms should not be interpreted to definitively restrict the scope of protection. Moreover, relational terms such as "first", "second", and the like are used solely to distinguish one element from another having the same name, and do not necessarily require or imply any actual relationship or sequence between these elements.

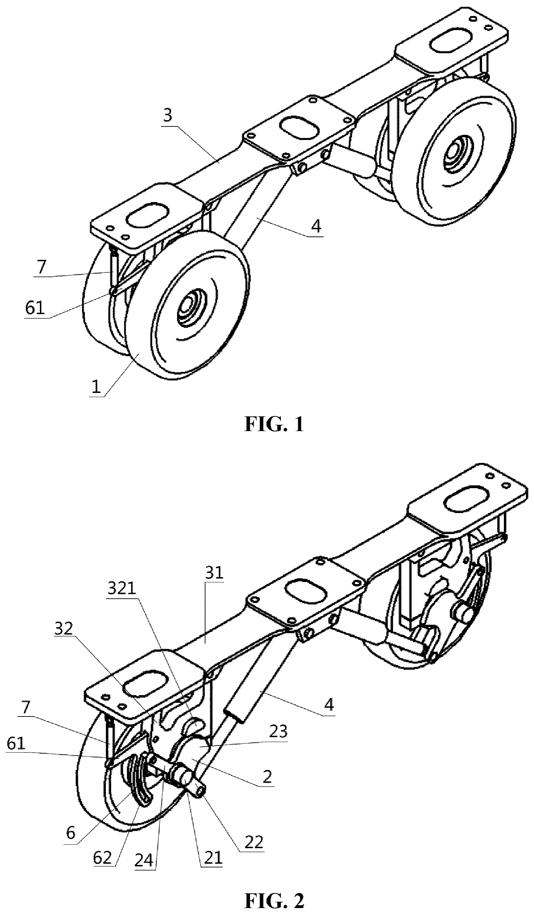

As shown in FIGS. 1 and 2, in a specific embodiment, a maglev train rescue wheel device according to the present application includes components such as wheels 1, wheel carriers 2, a mounting base 3, a hydraulic cylinder 4, an eccentric rotary shaft 5, a crank 6, and a locking spring 7.

The mounting base 3 is divided into two parts, namely a horizontal mounting base 31 and a vertical mounting base 32, which are used for mounting the wheel carriers 2, the eccentric rotary shaft 5, the hydraulic cylinder 4, the crank 6, and the locking spring 7. The vertical mounting base 32 is located below the horizontal mounting base 31 and connected to the horizontal mounting base 31. A side projection of the vertical mounting base 32 is substantially rectangular, and the vertical mounting base 32 is provided with a hole for weight reduction.

The wheel carrier 2 is mainly used to mount the wheel 1 and provide torque for the wheel 1 during the lowering and retraction processes under an action of the hydraulic cylinder 4. The wheel carriers 2 are located on both sides of the vertical mounting base 32 respectively and rotatably mounted to the vertical mounting base 32 via the eccentric rotary shaft 5. The vertical mounting base 32 is provided with a lower cover plate in a split manner. A body of the vertical mounting base 32 is provided with a downward-facing semicircular shaft hole at a bottom thereof, and the lower cover plate is provided with an upward-facing semicircular shaft hole at a top thereof. When connected, the two parts clamp the eccentric rotary shaft 4 to rotatably mount the eccentric rotary shaft 4 to the vertical mounting base 32 in a shaft embracing manner. A bearing is provided between the eccentric rotary shaft 5 and the shaft hole to ensure stable and reliable rotation of the wheel carriers 2.

A wheel axle 21 extending laterally is provided at an outer side of each wheel carrier 2, and the wheel 1 is mounted at the outer side of the corresponding wheel carrier 2 through the wheel axle 21. The two wheels 1 mounted on the two wheel carriers 2 respectively have their wheel axles aligned on a same axis, however, the wheel axles are not embodied as a common axle extending laterally. The wheel axles are separated by the vertical mounting base 32, forming two spaced-apart half-axles. This design ensures that the wheel axles 21 do not interfere with the vertical mounting base 32 during the retraction and lowering of the wheels 1.

The wheel carrier 2 is provided with a driving arm 22. The hydraulic cylinder 4 is arranged obliquely, with one end hinged to the horizontal mounting base 31 and the other end hinged to the driving arm 22 of the wheel carrier 2, to drive the wheel carriers 2, along with the wheels 1, to rotate around the eccentric rotary shaft 5, enabling the wheels 1 to be in the retracted or lowered state.

Each of both sides of the vertical mounting base 32 is provided with a limiting block 321, where a top of the limiting block 321 is arc-shaped and a bottom of the limiting block 321 has a horizontal limiting plane. Each wheel carrier 2 is provided with a support portion 23 for positioning, which is radially extended with the wheel axle 21 as a center of a circle. The eccentric rotary shaft 5 is located between the support portions 23 of the two wheel carriers 2 and connects the two support portions 23 laterally. A periphery of the support portion 23 of the wheel carrier 2 is provided with a support plane 231. In the retracted state of the wheels, the support plane 231 of the wheel carrier 2 rotates to a position where it avoids the limiting block 321, ensuring no contact with the limiting plane of the limiting block 321. In the lowered state of the wheels 1, the support plane 231 of the wheel carrier 2 rotates to a position corresponding to the limiting block 321 to upwardly abut against the limiting plane of the limiting block 321. With the limiting blocks 321 provided on the vertical mounting base 32 cooperating with the support portions 23 of the wheel carriers 2, the loads can be transmitted and the wheels 1 can always be kept in the lowered state throughout the rescue process.

In the lowered state of the wheels 1, there is an included angle θ between a line connecting a rotation center of the eccentric rotary shaft 5 with a center of the wheel axle 21 and the vertical direction. This design allows the rescue device to achieve mechanical self-locking of the wheels during the rescue process after the vehicle lifting action is completed, ensuring that the wheels 1 will not be lifted unexpectedly.

Furthermore, a crank 6 and a locking spring 7 are also provided. The crank 6 is located between the locking spring 7 and the vertical mounting base 32, and is hinged to both the locking spring 3 and the vertical mounting base 32.

Specifically, the crank 6 is configured in an arc shape with an outwardly extension arm 61 at its head portion. A side of the vertical mounting base 32 adjacent to the crank 6 is provided with a receiving groove. The head portion of the crank 6 extends into the receiving groove and is hinged to the vertical mounting base 32. The locking spring 7 is arranged vertically, with its upper end connected to the horizontal mounting base 31 and its lower end connected to the outwardly extension arm 61 of the crank 6. The crank 6 is provided with an arc-shaped slot 62. The wheel carrier 2 has a locking arm 24. The locking arms 24 of the two wheel carriers 2 on both sides of the crank 6 are connected by a hinge pin, and the hinge pin is located within the arc-shaped slot 62 of the crank 6 and is in sliding engagement with the arc-shaped slot 62 to slide along an arc-shaped track within the arc-shaped slot 62.

With the crank 6 and the locking spring 7, it is ensured that the locking force is sufficiently strong when the wheels 1 are retracted, while also guaranteeing that the interaction force between the wheel carriers 2 and the crank 6 is relatively small after the wheels 1 overcome the locking force, effectively increasing the lifespan of the components.

Moreover, an upper end of the arc-shaped slot 62 may be designed to bend towards a center of a circular arc of the arc-shaped slot. When the wheels 1 are retracted, the hinge pin between the locking arms 24 enters the bent head portion of the arc-shaped slot 62, thereby achieving locking through the arc-shaped slot when the rescue wheels are retracted.

The driving arm 22 and the locking arm 24 of each wheel carrier 2 are located on opposite sides of the wheel axle 21, that is, extension lines of the driving arm 22 and the locking arm 24 in the length direction both pass through a center of the wheel axle 21. In this embodiment, the driving arm 22 and the locking arm 24 are substantially located on a same straight line, roughly forming an "I" shape. When the driving arm 22 is driven by the hydraulic cylinder 4 to swing downwards, the locking arm 24 swings upwards, while when the driving arm 22 is driven by the hydraulic cylinder 4 to swing upwards, the locking arm 24 swings downwards.

A cylinder body of the hydraulic cylinder 4 is hinged to the horizontal mounting base 31, and a piston rod of the hydraulic cylinder 4 is hinged to the driving arms 22 of the wheel carriers 2. In the retracted state of the wheels 1, oil in a rodless chamber of the hydraulic cylinder 4 is locked, and the locking is achieved by the oil locked in the hydraulic cylinder 4. In the lowered state of the wheels 1, a pressure of the hydraulic cylinder 4 is maintained. The pressure maintaining function of the hydraulic cylinder 4 can avoid the risk of mechanical self-locking failure due to vibration when the wheels 1 pass over rail joints.

In addition, the wheels 1 employ elastic wheels, which can reduce the impact force between the wheels and the rail when passing over rail joints, thereby ensuring the reliability and service life of the overall structure.

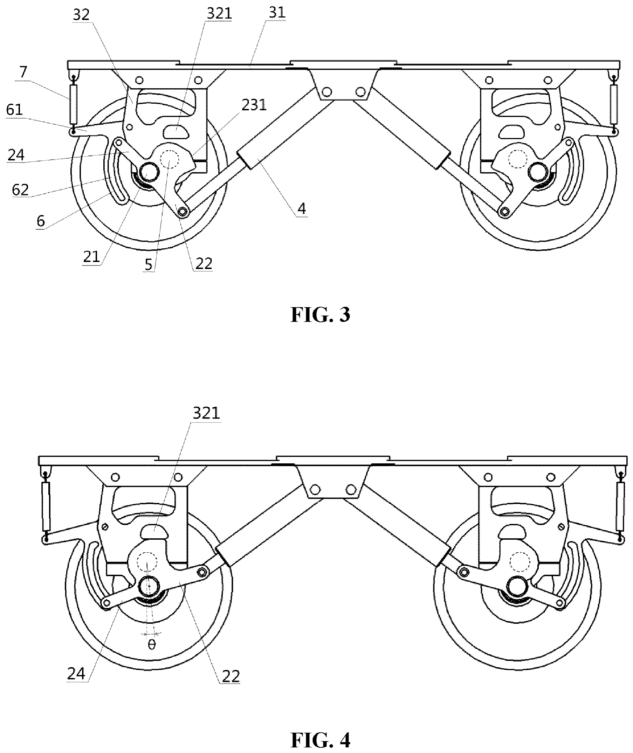

As shown in FIGS. 3 and 4, when the vehicle breaks down and needs rescue, the hydraulic cylinder 4 retracts, causing the driving arms 22 of the wheel carriers 2 to swing upwards, driving the wheel carriers 2 to rotate around the eccentric rotary shaft 5. The locking arms 24 of the wheel carriers 2 swing downwards, thereby overcoming the locking force of the spring 7 and the crank 6, allowing the wheel carriers 2 and the wheels 1 to be lowered.

Upon contact with the rail surface, the wheels 1 will replace the support skids on the levitation frame to support the vehicle, and gradually lift the vehicle under the continuous pulling force of the hydraulic cylinder 4. The vehicle lifting operation is fully completed when the support plane 231 of the wheel carrier 2 fully contacts the limiting plane of the limiting block 321.

After the rescue is completed, the wheel carriers 2 and the wheels 1 return to the locking position under the pushing force of the hydraulic cylinder 4. At this point, the oil in the rodless chamber of the hydraulic cylinder 4 is locked, achieving the retraction of the wheel carriers 2 and the wheels 1. In the event of oil leakage in the rodless chamber, the wheel carriers 3 and the wheels 1 are locked by the locking spring 7 and the crank 6. The design of the locking spring 7 and the crank 6 effectively prevents unintended lowering of the wheels 1, improving the reliability of stable locking after the wheels 1 are retracted.

With the structure of the wheel carriers 2, a larger moment arm is formed during the lowering and retraction of the rescue wheels, thereby effectively reducing the load on the hydraulic cylinder 4 during operation, which facilitates the selection and design of the hydraulic cylinder 4. Moreover, after the retraction operation is finished, the wheel can realize self-locking through its own mechanical structure and enhance its self-locking effect utilizing the pressure maintaining function of the hydraulic cylinder 4, effectively ensuring that the wheels 1 can pass the rail joints smoothly.

The above embodiments are only preferred solutions of the present application, and the present application is not specifically limited thereto. On this basis, targeted adjustments can be made according to actual needs, to obtain different embodiments. For example, an angle is provided between the driving arm 22 and the locking arm 24, or the wheel carrier 2 is designed into other suitable shapes, and so on. There are various implementations, which will not be exhaustively listed herein.

The present application aims to achieve rapid rescue functionality for high-speed magnetic levitation vehicles, and provides a rescue wheel device applicable in rescue situations for high-speed magnetic levitation vehicles under the design principles of economy, practicality, lightweight, modularity, and high reliability. The rescue wheel device features the unique mounting base, wheel carriers, wheels, hydraulic cylinders, eccentric rotary shafts, cranks, and locking springs. Relying on the mechanism formed by its own components, it achieves stable vehicle lifting, wheel self-locking after lifting, and wheel retraction and locking functions. These functions enable rapid rescue when vehicle failure happens.

In addition to the above maglev train rescue wheel device, a maglev train is further provided according to the present application. The maglev train is equipped with a train body and rescue devices mounted on a bottom of the train body. The rescue device is the maglev train rescue wheel device described above. Each pair of the maglev train rescue wheel devices is arranged in mirror symmetry on the bottom of the train body, with a pair of hydraulic cylinders 4 of each of the maglev train rescue wheel devices arranged in an inverted "V" shape. The rest structures of the maglev train are referred to the conventional technology, which will not be repeated here.

The maglev train rescue wheel device and the maglev train according to the present application are described in detail above. The principle and the embodiments of the present application are illustrated herein by specific examples. The above description of the examples is only intended to facilitate the understanding of the core concept of the present application. It should be noted that, several improvements and modifications may be made by those skilled in the art to the present application without departing from the principle of the present application, and these improvements and modifications also fall within the protection scope of the claims of the present application.

## Claims

1. A maglev train rescue wheel device, comprising a mounting base (3), wheel carriers (2), and a hydraulic cylinder (4), wherein
the mounting base (3) comprises a horizontal mounting base (31) and a vertical mounting base (32), with the vertical mounting base (32) located below the horizontal mounting base (31) and connected to the horizontal mounting base (31);
the wheel carriers (2) are disposed on both sides of the vertical mounting base (32) respectively and rotatably mounted to the vertical mounting base (32) via an eccentric rotary shaft (5), and each of the wheel carriers (2) is provided with a wheel (1) mounted at an outer side of the wheel carrier (2) through a wheel axle (21);
the hydraulic cylinder (4) is arranged obliquely, with one end hinged to the horizontal mounting base (31) and the other end hinged to driving arms (22) of the wheel carriers (2), to drive the wheel carriers (2) along with the wheels (1) to rotate around the eccentric rotary shaft (5), to make the wheels (1) be in a retracted state or a lowered state; and
each of the both sides of the vertical mounting base (32) is provided with a limiting block (321), and each of the wheel carriers (2) is provided with a support portion (23) for positioning, wherein in the retracted state of the wheels (1), the support portion (23) of each of the wheel carriers (2) is not in contact with the corresponding limiting block (321); and in the lowered state of the wheels (1), the support portion (2) of each of the wheel carriers (2) upwardly abuts against the corresponding limiting block (321).

2. The maglev train rescue wheel device according to claim 1, wherein in the lowered state of the wheels (1), an included angle is formed between a line connecting a rotation center of the eccentric rotary shaft (5) with a center of the wheel axle (21) and a vertical direction.

3. The maglev train rescue wheel device according to claim 1, further comprising a crank (6) and a locking spring (7), wherein
the crank (6) is configured in an arc shape with an extension arm (61) at its head portion, the head portion of the crank (6) is hinged to the vertical mounting base (32), an upper end of the locking spring (7) is connected to the horizontal mounting base (31), and a lower end of the locking spring (7) is connected to the extension arm (61) of the crank (6); and
the crank (6) is provided with an arc-shaped slot (62), each of the wheel carriers (2) is provided with a locking arm (24), and the locking arms (24) of two of the wheel carriers (2) are connected by a hinge pin that passes through the arc-shaped slot (62), with the hinge pin being in sliding engagement with the arc-shaped slot (62).

4. The maglev train rescue wheel device according to claim 3, wherein an upper end of the arc-shaped slot (62) is bent towards a center of a circular arc of the arc-shaped slot.

5. The maglev train rescue wheel device according to claim 3, wherein the driving arm (22) and the locking arm (24) of each of the wheel carriers (2) are located at opposite sides of the corresponding wheel axle (21).

6. The maglev train rescue wheel device according to claim 5, wherein the driving arm (22) and the locking arm (24) are substantially aligned along a same axis, and alternatively, the driving arm (22) and the locking arm (24) are disposed at an included angle relative to each other.

7. The maglev train rescue wheel device according to claim 1, wherein a bottom of the limiting block (321) has a horizontal limiting plane, and a periphery of the support portion (23) of the wheel carrier (2) is provided with a support plane (231); and wherein in the lowered state of the wheels (1), the support plane (231) of the wheel carrier (2) upwardly abuts against the limiting plane of the limiting block (321).

8. The maglev train rescue wheel device according to claim 7, wherein the support portion (23) of the wheel carrier (2) is formed as a portion extending in a radial direction by taking the wheel axle (21) as a center, and the eccentric rotary shaft (5) laterally connects the support portions (23) of two of the wheel carriers (2).

9. The maglev train rescue wheel device according to any one of claims 1 to 8, wherein a cylinder body of the hydraulic cylinder (4) is hinged to the horizontal mounting base (31), and a piston rod of the hydraulic cylinder (4) is hinged to the driving arm (22); and wherein
in the retracted state of the wheels (1), oil in a rodless chamber of the hydraulic cylinder (4) is locked; and in the lowered state of the wheel (1), a pressure of the hydraulic cylinder (4) is maintained.

10. A maglev train, comprising a train body and rescue devices arranged at a bottom of the train body, wherein each of the rescue devices is the maglev train rescue wheel device according to any one of claims 1 to 9, each pair of the maglev train rescue wheel devices is arranged in mirror symmetry at the bottom of the train body, and a pair of hydraulic cylinders (4) of each of the maglev train rescue wheel devices is arranged in an inverted "V" shape.
